(19) Europäisches Patentamt / European Patent Office / Office européen des brevets

(11) **EP 3 210 046 B1**

(12) **FASCICULE DE BREVET EUROPEEN**

(45) Date de publication et mention
de la délivrance du brevet:
**18.09.2019 Bulletin 2019/38**

(21) Numéro de dépôt: **15784366.5**

(22) Date de dépôt: **22.10.2015**

(51) Int Cl.:
*G01T 3/06* *(2006.01)* *G01T 1/20* *(2006.01)*

(86) Numéro de dépôt international:
**PCT/EP2015/074509**

(87) Numéro de publication internationale:
**WO 2016/062816 (28.04.2016 Gazette 2016/17)**

(54) **DISPOSITIF DE DÉTECTION DE NEUTRONS THERMIQUES**

VORRICHTUNG ZUR DETEKTION THERMISCHER NEUTRONEN

DEVICE FOR THERMAL NEUTRON DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2014 FR 1460266**

(43) Date de publication de la demande:
**30.08.2017 Bulletin 2017/35**

(73) Titulaire: **Commissariat à l'Énergie Atomique et aux Énergies Alternatives 75015 Paris (FR)**

(72) Inventeurs:
• **COULON, Romain**
  **F-58400 Chaulgnes (FR)**
• **DUMAZERT, Jonathan**
  **F-30100 Ales (FR)**
• **BERTRAND, Guillaume**
  **F-07380 Meyras (FR)**
• **HAMEL, Matthieu**
  **F-50100 Cherbourg-Octeville (FR)**
• **SGUERRA, Fabien**
  **F-06700 St Laurent Du Var (FR)**

(74) Mandataire: **Brevalex
95, rue d'Amsterdam
75378 Paris Cedex 8 (FR)**

(56) Documents cités:
**WO-A1-2005/008287 US-A1- 2005 105 681**

## Description

Domaine technique et art antérieur

L'invention concerne un dispositif de détection de neutrons thermiques.

L'invention s'applique dans de nombreux domaines tels que, par exemple :

- La fabrication et le conditionnement de matière fissile à destination des chaudières nucléaires (suivi de criticité) ;
- La radioprotection nucléaire (suivi opérationnel du débit de dose neutronique) ;
- La détection de matière radiologique (lutte contre la prolifération des armes nucléaires).

La détection des neutrons représente un défi technologique en raison de la nature indirectement ionisante de ceux-ci. En effet, lorsque des neutrons interagissent avec un capteur, ce sont les particules secondaires chargées électriquement qui sont générées par l'interaction entre les neutrons et les atomes du capteur qui constituent la signature de la présence de neutrons. Il est en outre nécessaire de s'affranchir, au moment de la détection, du signal généré par les particules secondaires nées de l'interaction entre les rayonnements X et gamma et les électrons du cortège des atomes du capteur. En conséquence, la détection neutronique est favorisée par des capteurs présentant une densité de charges faible tels que les gaz et les milieux organiques, ainsi que par des matériaux dont la section efficace d'interaction avec les neutrons est élevée.

Parmi les détecteurs spécifiquement dédiés aux neutrons thermiques, les compteurs proportionnels à hélium-3, exploitant une réaction de type (n,p) pour laquelle la section efficace se monte à 5327 barns, sont les plus répandus. Des alternatives à la technologie hélium-3 existent, au premier rang desquelles figurent les scintillateurs organiques plastiques, dont un avantage est qu'ils sont peu coûteux. Les dopants principaux utilisés en scintillation plastique pour la détection de neutrons thermiques sont :

- Le bore-10 de section efficace égale à 3840 barns pour la capture (n, a) ; et
- Le lithium-6 de section efficace égale à 950 barns pour la capture (n, a).

L'atout majeur de ces deux dopants est qu'ils permettent de discriminer le signal neutronique du signal gamma à l'aide d'une analyse de la forme des impulsions délivrées par le capteur.

Le brevet US 8 389 941 divulgue un tel système. Le système comprend un bloc de scintillateur plastique dopé au bore-10 ou au lithium-6, sensible par conséquent aux neutrons thermiques, inséré entre deux écrans scintillants sensibles aux rayonnements X et gamma seuls. Les particules de recul émises lors des interactions des neutrons thermiques avec le bore-10 et le lithium-6 sont très énergétiques (énergie supérieure à 2 MeV) et lourdes, ce qui limite leur échappement, si bien qu'un tel dispositif présente un rapport signal neutronique sur bruit photonique (RSB) suffisant pour opérer une discrimination par seuillage en énergie des impulsions. Les écrans scintillants permettent en outre la thermalisation des neutrons rapides émis par fission.

Toutefois, les sections efficaces de capture présentées par le bore-10 et le lithium-6 étant largement inférieures à celles de l'hélium-3, il n'est pas envisageable de concurrencer réellement la technologie à hélium-3 avec de tels scintillateurs plastiques.

Il est également connu de l'art antérieur la demande de brevet déposée en France, par la Demanderesse, en date du 8 Juillet 1991, sous le numéro d'enregistrement national 91 08542. La demande de brevet N°91 08542 divulgue un détecteur de neutrons qui comprend deux scintillateurs concentriques : le scintillateur extérieur est un plastique dopé au lithium-6, sensible aux neutrons thermiques et bloquant ces derniers (dont le parcours moyen est millimétrique dans la matrice dopée) et le scintillateur intérieur est un cristal inorganique sensible aux rayonnements gamma, suffisamment dense pour que le pic photoélectrique soit observable. Dans le cas où la différence d'énergie entre le signal neutronique et le pic photoélectrique dû aux photons n'est pas assez large pour autoriser un seuillage en énergie, un décaleur de longueur d'onde est utilisé en sortie du scintillateur inorganique de façon à accroître le rapport signal sur bruit et inversement selon le type d'applications souhaité.

Ce détecteur de neutrons n'est utilisable que si le dopant sensible aux neutrons thermiques produit, après réaction avec ces derniers, des particules lourdes chargées, notamment de type noyau d'hélium, comme c'est le cas du lithium ou du bore. En effet, c'est la discrimination par seuillage en amplitude, éventuellement facilitée par un décalage de la longueur d'onde d'émission du scintillateur intérieur, du pic neutronique observable dans le scintillateur extérieur dopé au lithium du pic photoélectrique observable dans le scintillateur intérieur inorganique qui permet d'isoler les neutrons de l'ambiance X et gamma et, par conséquent, d'en assurer la détection.

Le détecteur de neutrons divulgué dans la demande N°91 08542 présente des inconvénients. En effet, le principe de détection mis en oeuvre dans la demande N°91 08542 nécessite l'enregistrement, au sein du scintillateur non dopé, du pic photoélectrique correspondant aux interactions X et gamma. Un tel pic n'est observable avec une probabilité suffisante qu'à l'intérieur de scintillateurs cristallins inorganiques qui sont extrêmement coûteux. Par ailleurs, le scintillateur dopé au lithium doit être placé à l'extérieur de façon à bloquer l'accès des neutrons thermiques au scintillateur inorganique. Dans le cas où un neutron non thermalisé traverse le premier scintillateur, il est alors susceptible d'interagir avec les composants du second scintillateur et de produire un signal de scintillation parasite. Ceci présente un autre inconvénient.

Il est également connu de l'art antérieur la demande de brevet EP 2 290 406 A2. Cette demande divulgue un dispositif de détection de neutrons thermiques comprenant deux blocs scintillateurs dont l'un est placé à l'intérieur de l'autre, une structure séparatrice séparant les deux blocs. Le bloc scintillateur intérieur est un scintillateur inorganique dopé au Gadolinium et le bloc scintillateur extérieur est un scintillateur plastique. Ce dispositif comprend, en outre, des moyens de traitement qui mettent en oeuvre une détection par coïncidence : un recul protonique dans le scintillateur plastique est corrélé à l'intérieur d'une fenêtre temporelle dûment réglé sur un dépôt énergétique de nature photonique excédant le plafond de la chaîne de désintégration du thorium-233, identifié à la signature à haute énergie de la désexcitation radiative d'un lanthanide après capture d'un neutron thermique.

Ce type de détection n'exploite que les captures radiatives de neutrons thermiques qui sont corrélées à un recul protonique. Il s'ensuit une limitation de la sensibilité de détection des neutrons thermiques, du fait de la nécessaire corrélation qui doit exister entre l'événement de capture radiative qui survient au sein du scintillateur inorganique dopé au gadolinium et le recul protonique qui survient au sein du scintillateur plastique. Cette limitation est principalement due à la faible probabilité de détection du recul protonique. Avantageusement, le dispositif de détection de l'invention ne présente pas cette limitation.

Le document WO2005/008287 A1 divulgue un dispositif pour la détection de neutrons thermiques comportant un premier et un deuxième bloc scintillateurs. Le nombre de neutrons thermiques détectés est proportionnel à la différence entre les signaux à la sortie de chaque scintillateur.

De façon plus générale, le dispositif de l'invention ne présente pas les inconvénients des dispositifs de l'art antérieur mentionnés ci-dessus.

Exposé de l'invention

En effet, l'invention concerne un dispositif de détection de neutrons thermiques comprenant un premier bloc scintillateur (1) et un deuxième bloc scintillateur (2), le deuxième bloc scintillateur (2) étant placé dans un volume intérieur du premier bloc scintillateur (1), un réflecteur de photons (3) qui sépare le premier bloc scintillateur (1) du deuxième bloc scintillateur (2) de façon à isoler une voie par laquelle le premier bloc scintillateur (1) émet des photons de fluorescence d'une voie par laquelle le deuxième bloc scintillateur (2) émet des photons de fluorescence, un système de conversion de photons de fluorescence (4-5,17) qui recueille les photons de fluorescence émis par les premier et deuxième blocs scintillateurs et délivre un signal électrique représentatif de photons gamma détectés par le premier bloc scintillateur et un signal électrique représentatif de photons gamma détectés par le deuxième bloc scintillateur, un système de traitement qui calcule un premier signal de comptage ($N_1$) à partir du signal électrique représentatif des photons gamma détectés par le premier bloc scintillateur et un deuxième signal de comptage ($N_2$) à partir du signal électrique représentatif des photons gamma détectés par le deuxième bloc scintillateur, caractérisé en ce que: le premier (1) et le deuxième (2) blocs scintillateurs sont des blocs scintillateurs plastique de volumes sensiblement identiques contenant, chacun, au moins un fluorophore, le premier ou le deuxième bloc scintillateur étant dopé au gadolinium, le dispositif de détection comprenant, en outre : un circuit de comparaison (15) qui comprend des moyens pour faire une différence de valeurs estimées ($\lambda_1$, $\lambda_2$) des premier et deuxième signaux de comptage ($N_1$, $N_2$), des moyens pour calculer un seuil de décision à partir desdites valeurs estimées, et des moyens pour comparer ladite différence avec le seuil de décision de sorte que, si ladite différence est supérieure au seuil, un signal de validation de détection de neutrons thermiques est délivré par le circuit de comparaison.

Selon un premier mode de réalisation de l'invention, le (les) fluorophore(s) présent(s) dans le premier bloc scintillateur est (sont) identique(s) au(x) fluorophore(s) présent(s) dans le deuxième bloc scintillateur et le système de conversion de photons de fluorescence est constitué d'un premier système de conversion de photons de fluorescence associé au premier bloc scintillateur et qui recueille les photons de fluoresence émis par le premier bloc scintillateur et d'un deuxième système de conversion de photons de fluorescence, indépendant du premier système de conversion de photons de fluorescence, et qui recueille les photons de fluorescence émis par le deuxième bloc scintillateur.

Selon un deuxième mode de réalisation de l'invention, au moins un fluorophore présent dans le premier bloc scintillateur ou dans le deuxième bloc scintillateur a une constante de décroissance très sensiblement différente d'une constante de décroissance de chacun des autres fluorophores présent dans le premier bloc scintillateur et le deuxième bloc scintillateur et le système de conversion de photons de fluorescence est un système unique associé au premier bloc scintillateur et au deuxième bloc scintillateur et qui recueille les photons de fluorescence émis par le premier bloc scintillateur et par le deuxième bloc scintillateur.

Selon un perfectionnement de l'invention, le dispositif de détection de neutrons comprend, en outre, des moyens aptes à équilibrer les rendements lumineux des premier et deuxième blocs scintillateurs.

Les moyens aptes à équilibrer les rendements lumineux sont constitués :

- d'un filtre optique placé soit entre la voie par laquelle le premier bloc scintillateur émet des photons de fluorescence et le système de conversion de photons de fluorescence, soit entre la voie par laquelle le deuxième bloc scintillateur émet des photons de fluorescence et le système de conversion de photons de fluorescence, et/ou

- d'un dispositif apte à décaler une longueur d'onde de photons de fluorescence, le dispositif apte à décaler une longueur d'onde de photons de fluorescence étant placé soit entre la voie par laquelle le premier bloc scintillateur émet des photons de fluorescence et le système de conversion de photons de fluorescence, soit entre la voie par laquelle le deuxième bloc scintillateur émet des photons de fluorescence et le système de conversion de photons de fluorescence, et/ou

- d'au moins un fluorophore présent dans le premier ou le deuxième bloc scintillateur et ayant une concentration donnée et/ou une nature particulière.

Le gadolinium présente une section efficace pour la capture radiative des neutrons thermiques qui a une valeur élevée (typiquement 48890 barns). Lors de la capture radiative d'un neutron thermique, il y a émission d'un photon gamma (rayon gamma). Le bloc scintillateur dopé en gadolinium est donc apte à détecter les neutrons thermiques via l'émission de rayons gamma alors que le bloc scintillateur non dopé n'est pas apte à cette détection.

La différence entre le nombre d'événements associés aux rayons gamma qui sont détectés par le bloc scintillateur dopé au gadolinium et le nombre le nombre d'événements associés aux rayons gamma qui sont détectés par le bloc scintillateur non dopé au gadolinium permet avantageusement, non seulement, de détecter la présence de neutrons thermiques, mais également de quantifier le nombre de neutrons thermiques détectés.

Brève description des figures

D'autres caractéristiques et avantages de l'invention apparaîtront à la lecture de la description qui va suivre, faite en référence aux figures jointes, parmi lesquelles :

- La figure 1 représente un dispositif de détection de neutrons thermiques selon un premier mode de réalisation de l'invention ;

- La figure 2 représente un synoptique du circuit de traitement qui participe à un dispositif de comptage de neutrons thermiques selon le premier mode de réalisation de l'invention ;

- La figure 3 représente un mode de réalisation particulier d'un circuit de comparaison qui participe au circuit de traitement représenté en figure 2 ;

- La figure 4 représente un dispositif de détection de neutrons thermiques selon un deuxième mode de réalisation de l'invention ;

- La figure 5 représente un synoptique du circuit de traitement qui participe à un dispositif de comptage de neutrons thermiques selon le deuxième mode de réalisation de l'invention.

Exposé détaillé de modes de réalisation particuliers

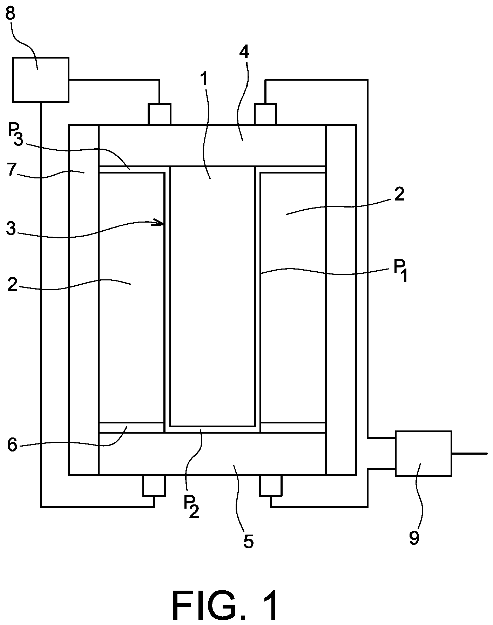

La figure 1 représente un dispositif de détection de neutrons thermiques selon un premier mode de réalisation de l'invention.

Le dispositif comprend :

- un bloc scintillateur plastique 1 dopé au gadolinium,

- un bloc scintillateur plastique 2 non dopé au gadolinium et qui entoure le bloc scintillateur plastique 1,

- un réflecteur 3 qui sépare les blocs scintillateurs plastique 1 et 2 de façon à isoler la voie par laquelle les photons de fluorescence sont émis par le scintillateur plastique 1 de la voie par laquelle les photons de fluorescence sont émis du scintillateur plastique 2,

- un système de conversion 4 associé au bloc scintillateur plastique 1 et qui recueille les photons de fluorescence émis par le scintillateur plastique 1,

- un système de conversion 5 associé au bloc scintillateur plastique 2 et qui recueille les photons de fluorescence émis par le scintillateur plastique 2,

- un filtre 6 interposé entre le bloc scintillateur plastique 2 et le système de conversion 5,

- un blindage 7 (optionnel) qui protège les scintillateurs plastiques 1 et 2 des rayonnements X et gamma ambiants,

- une alimentation 8 apte à alimenter en tension continue les systèmes de conversion 4 et 5, et

- un circuit électronique de traitement 9 qui traite les signaux délivrés par les systèmes de conversion 4 et 5.

Les blocs scintillateurs plastique 1 et 2 sont dimensionnés pour avoir sensiblement la même probabilité de détection de rayonnement gamma. Ils présentent en conséquence des volumes sensiblement identiques. De façon générale, les blocs scintillateurs sont concentriques et de forme quelconque, un bloc scintillateur étant placé dans un volume intérieur de l'autre bloc scintillateur.

Selon le mode de réalisation de l'invention représenté en figure 1, les blocs scintillateurs sont de forme cylindrique. Le bloc scintillateur plastique 1 dopé au gadolinium est un cylindre plein et le bloc scintillateur plastique 2 non dopé au gadolinium est un cylindre creux dans lequel est placé le cylindre 1. L'invention concerne également le cas où c'est le bloc scintillateur plastique non dopé au gadolinium qui est un cylindre plein et le bloc scintillateur plastique dopé au gadolinium qui est un cylindre creux dans lequel est placé le bloc scintillateur plastique non dopé au gadolinium.

Les blocs scintillateurs 1 et 2, le réflecteur 3 et le filtre 6 constituent une pièce monolithique ayant une forme de cylindre de révolution. Une première base du cylindre de révolution est constituée par une première base du bloc scintillateur plastique 1 et par une partie plane $P_3$ du réflecteur 3 qui recouvre une face du bloc scintillateur 2. La deuxième base du cylindre de révolution, opposée à la première base, est constituée par une partie plane $P_2$ du réflecteur 3 qui recouvre la deuxième base du bloc scintillateur 1, opposée à la première base dudit bloc, et par le filtre 6 qui recouvre la face du bloc scintillateur 2, opposée à la face recouverte par la partie plane $P_3$. Le réflecteur 3 comprend également une partie cylindrique $P_1$ qui isole la surface intérieure du bloc scintillateur 2 de la surface extérieure du bloc scintillateur 1.

Le système de conversion 4 qui recueille les photons de fluorescence émis par le scintillateur plastique 1 est fixé sur la première base du cylindre de révolution que constitue la pièce monolithique et le système de conversion 5 qui recueille les photons de fluorescence émis par le scintillateur plastique 2 est fixé sur la deuxième base, opposée à la première base.

Chacun des blocs scintillateurs plastique 1 et 2 est fait, par exemple, d'une matrice plastique styrénique et réticulée dans laquelle sont présents les fluorophores 2,5-diphényloxazole (PPO) et 1,4-bis[2-(2-méthylphényl)éthènyl]-benzène (Bis-MSB). Le bloc scintillateur 1 a, par exemple, un diamètre D égal à 17mm et une hauteur égale à 6,5mm. L'épaisseur du cylindre creux est ajustée pour que le bloc scintillateur 2 présente un volume sensiblement équivalent à celui du bloc scintillateur 1. Le bloc scintillateur 2 est dopé au gadolinium, par exemple à 3,6 % de sa masse. De façon plus générale, le dopage du bloc scintillateur 2 est dopé au gadolinium à x% de sa masse, la valeur x étant comprise, par exemple, dans l'intervalle ]0, 8].

Les systèmes de conversion de photons de fluorescence 4 et 5 sont constitués, chacun, d'un circuit de conversion de photons en électrons (par exemple, une photocathode ou une photodiode) et d'un circuit de multiplication de charges (par exemple, une diode à avalanche ou un photomultiplicateur).

La structure du dispositif de l'invention est donc telle que le système de conversion 4 ne recueille que les photons de fluorescence émis par le bloc scintillateur 1 et le système de conversion 5 ne recueille que les photons de fluorescence émis par le bloc scintillateur 2. Le réflecteur 3 est fait, par exemple, en aluminium.

En raison du dopage du bloc scintillateur 1 en gadolinium, qui est un élément lourd, le rendement lumineux du bloc scintillateur 1 est inférieur au rendement lumineux du bloc scintillateur 2. Par ailleurs, dans le cas où les systèmes de conversion utilisent une photocathode bialkali pour faire la conversion des photons en électrons, le dépôt de bialkali étant plus dense au centre qu'à la périphérie de la structure constituée par l'association des deux blocs scintillateurs. Ceci contribue à diminuer le rendement lumineux du bloc scintillateur 1 par rapport au rendement lumineux du bloc scintillateur 2. Ainsi, plusieurs effets entrent-ils en compétition pour perturber l'équilibre du rendement lumineux entre les deux blocs scintillateurs.

De façon générale, l'invention prévoit des moyens aptes à diminuer le rendement lumineux le plus élevé. Selon les cas, il s'agira de diminuer le rendement lumineux du bloc scintillateur dopé au gadolinium ou du bloc scintillateur non dopé au gadolinium. Sur l'exemple de la figure 1, c'est le rendement du scintillateur non dopé au gadolinium qui est diminué.

Ces moyens aptes à diminuer le rendement lumineux peuvent être, par exemple :

- Un filtre optique placé en sortie du bloc scintillateur qui a le plus fort rendement lumineux, par exemple le filtre optique 6 placé en sortie du bloc scintillateur 2 sur la figure 1, et/ou
- Un dispositif apte à décaler les longueurs d'onde en sortie de l'un ou l'autre des blocs scintillateurs, le décalage de longueur d'onde étant un décalage vers le haut, par exemple de quelques centaines de nanomètres, et/ou
- La modification, dans l'un ou l'autre des deux blocs scintillateurs, de la concentration et/ou de la nature d'au moins un fluorophore de façon à produire un effet identique aux effets mentionnés ci-dessus (filtrage optique ou décalage de longueur d'onde).

L'alimentation haute tension 8 polarise les convertisseurs 4 et 5 pour assurer la multiplication des charges. Dans un mode de réalisation particulier, l'invention prévoit un élément de protection 7 qui isole les scintillateurs 1 et 2 des photons gamma ambiants. L'élément de protection 7 est constitué, par exemple, d'un réflecteur de photons. L'élément de protection 7 peut également être, par exemple, une structure constituée d'un réflecteur de photons qui recouvre la surface extérieure du bloc scintillateur 2, d'un isolant optique qui recouvre le réflecteur de photons qui recouvre le bloc scintillateur 2 et d'un blindage qui recouvre l'isolant optique. L'isolant optique est, par exemple, de la peinture noire.

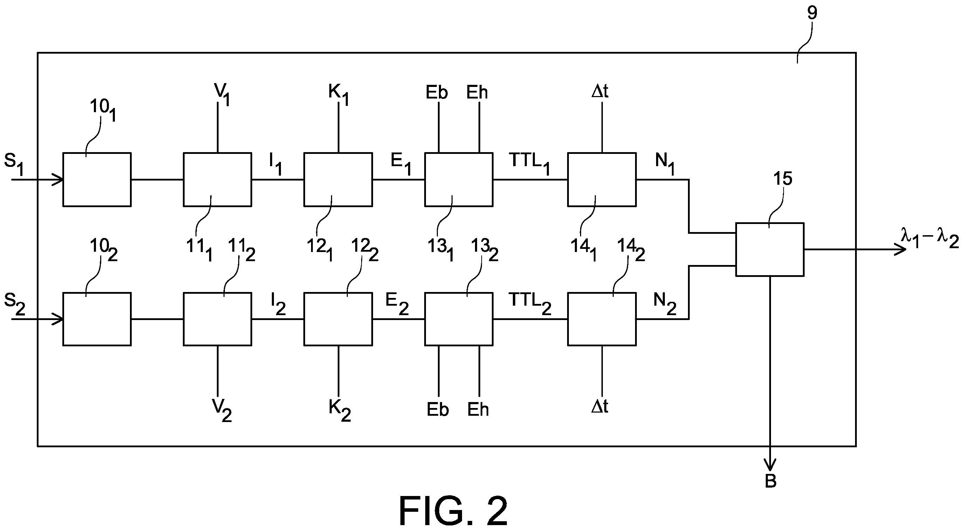

La figure 2 représente un synoptique du circuit de traitement qui participe au dispositif de comptage de neutrons thermiques selon le premier mode de réalisation de l'invention.

Le circuit de traitement 9 comprend deux voies de traitement et un circuit de comparaison. Chaque voie de traitement comprend un préamplificateur (optionnel) $10_i$ (i=1, 2), un discriminateur d'impulsion $11_i$ (i=1, 2), un circuit d'évaluation d'énergie $12_i$ (i=1, 2), un comparateur à double seuil $13_i$ (i=1, 2) et un compteur incrémental $14_i$ (i=1, 2). Le préamplificateur est optionnel, selon que le niveau des signaux $S_1$, $S_2$ provenant respectivement du système de conversion associé au bloc scintillateur plastique dopé au gadolinium et du système de conversion associé au bloc scintillateur plastique non dopé au gadolinium est suffisant ou non.

Chaque circuit de discrimination d'impulsion $11_i$, (i=1, 2) délivre une impulsion $I_i$ dès lors que le signal qu'il reçoit sur son entrée est supérieur à un seuil $V_i$. Le

seuil $V_i$ est représentatif du bruit électronique du photomultiplicateur qui délivre le signal Si (i=1, 2). Le seuil $V_i$ peut être un seuil en amplitude, une aire, une durée ou tout autre critère pertinent. La discrimination par rapport au bruit peut également être effectuée par un algorithme de déclenchement (« triggering » en langue anglaise). Le circuit de discrimination d'impulsion a donc pour fonction de valider la présence de signaux utiles comparativement au bruit électronique des circuits de détection.

Chaque circuit d'évaluation d'énergie $12_i$ calcule l'énergie $E_i$ qui est associée à l'impulsion $I_i$ sur la base d'un coefficient de conversion d'amplitude ou d'aire d'impulsion $K_i$ précédemment obtenu par étalonnage. La valeur d'énergie $E_i$ délivrée par le circuit $12_i$ est alors comparée à des seuils d'énergie haut Eh et bas Eb afin de déterminer si cette valeur appartient ou non à un intervalle utile [Eb, Eh]. L'intervalle utile [Eb, Eh] est défini par des valeurs d'énergie caractéristiques des pics d'émission gamma du gadolinium. Un exemple d'intervalle [Eb, Eh] est ainsi l'intervalle [30keV, 100keV] ou encore l'intervalle [150keV, 200keV].

Chaque comparateur à double seuil $13_i$ délivre un signal logique tout ou rien $TTL_i$ qui dépend de l'appartenance ou non de l'énergie $E_i$ à l'intervalle [Eb, Eh]. Si l'énergie $E_i$ appartient à l'intervalle, le signal vaut par exemple « 1 » et, si l'énergie $E_i$ n'appartient pas à l'intervalle, le signal vaut alors « 0 ». Chaque signal logique $TTL_i$ de valeur « 1 » est compté par le compteur incrémental $14_i$ sur une durée $\Delta t$. Un compteur incrémental $14_i$ délivre une valeur de comptage $N_i$ qui représente alors le nombre le nombre de coups enregistrés sur la voie « i ».

Les valeurs de comptage $N_1$ et $N_2$ constituent les données d'entrée d'un circuit de comparaison 15. Le nombre de coups $N_1$ correspond au signal $S_1$ issu du bloc scintillateur plastique dopé au gadolinium 1 et le nombre de coups $N_2$ correspond au signal $S_2$ issu du bloc scintillateur plastique non dopé au gadolinium 2. Le nombre de coups $N_1$ est donc associé à la détection de rayons gamma incidents et de rayons gamma issus de la détection de neutrons thermiques, alors que le nombre de coups $N_2$ est associé à la seule détection de rayons gamma incidents.

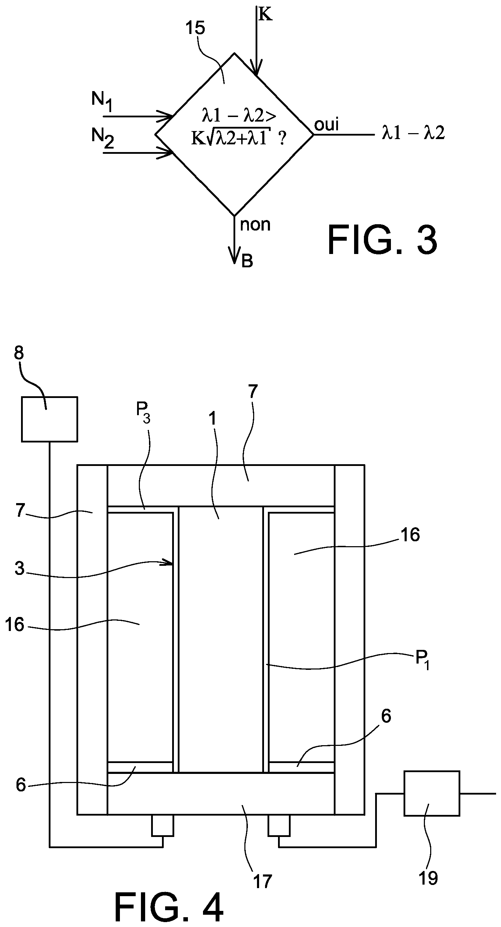

Selon le mode de réalisation préférentiel de l'invention, le circuit de comparaison 15 est un bloc de traitement qui met en oeuvre un algorithme de compensation par test d'hypothèse de facteur K. La figure 3 représente le circuit de comparaison 15. Les valeurs de comptage $N_1$ et $N_2$ sont des variables aléatoires de Poisson. L'algorithme de compensation calcule tout d'abord la différence entre la valeur estimée $\lambda_1$ du paramètre de la variable aléatoire de Poisson $N_1$ et la valeur estimée $\lambda_2$ du paramètre de la variable aléatoire de Poisson $N_2$. Cette différence est ensuite comparée à la grandeur

$$K\sqrt{\lambda_1 + \lambda_2}$$ qui est la valeur d'incertitude théorique sous hypothèse de statistique discrète de Poisson. La grandeur K est un facteur d'élargissement qui gouverne la probabilité de fausse détection du test de détection neutronique. De façon connue en soi, la grandeur K est un nombre réel typiquement compris dans l'intervalle ]0, 10].

Deux cas se présentent alors :

a) $\lambda_1\text{-}\lambda_2 \geq K\sqrt{\lambda_1 + \lambda_2}$, ou

b) $\lambda_1\text{-}\lambda_2 < K\sqrt{\lambda_1 + \lambda_2}$

Dans le cas a), il est considéré que la différence $\lambda_1\text{-}\lambda_2$ représente une réponse de détection de neutrons thermiques et cette différence est prise en compte comme signal de sortie. Dans le cas b), il est considéré que la différence $\lambda_1\text{-}\lambda_2$ ne représente pas une réponse de détection de neutrons thermiques et le circuit de comparaison 15 délivre un signal d'absence de détection de neutrons thermiques (bruit B). Si cela s'avère nécessaire, selon un perfectionnement de l'invention, la différence des valeurs estimée est une différence pondérée.

La figure 4 représente un dispositif de détection de neutrons thermiques selon un deuxième mode de réalisation de l'invention.

Selon le deuxième mode de réalisation de l'invention, un même système de conversion recueille les photons de fluorescence émis par les deux blocs scintillateurs.

Le dispositif comprend :

- un bloc scintillateur plastique 1 comprenant un fluorophore ayant une constante de temps de décroissance $D_1$, dopé au gadolinium,
- un bloc scintillateur plastique 16 comprenant un fluorophore ayant une constante de temps de décroissance $D_2$ significativement différente de $D_1$, non dopé au gadolinium,
- un réflecteur 3 qui isole l'un de l'autre les corps des blocs scintillateurs 1 et 16,
- un système de conversion 17 apte à recueillir les photons de fluorescence émis par les blocs scintillateurs plastique 1 et 16,
- un filtre 6 interposé entre le bloc scintillateur plastique 16 et le système de conversion 17,
- un blindage 7 (optionnel) qui protège les scintillateurs plastiques 1 et 16 des rayonnements X et gamma ambiants,
- une alimentation 18 apte à alimenter en tension continue le système de conversion 17, et
- un circuit de traitement 19 qui traite le signal délivré par le système de conversion 17.

Les blocs scintillateurs plastique du deuxième mode de réalisation de l'invention ont une géométrie similaire à celle des blocs scintillateurs plastique du premier mode de réalisation. De même que dans le premier mode de réalisation de l'invention, de façon préférentielle, le bloc scintillateur plastique non dopé au gadolinium entoure le bloc scintillateur dopé au gadolinium. Toutefois, une configuration inverse est également possible.

Selon le premier mode de réalisation de l'invention, les constantes de décroissance des deux blocs scintillateurs sont sensiblement identiques. Le deuxième mode de réalisation de l'invention se distingue du premier mode de réalisation par une différence significative des constantes de décroissance $D_1$ et $D_2$. Par différence significative des constantes de décroissance $D_1$ et $D_2$, il faut entendre, par exemple, que le rapport $D_1/D_2$ est supérieur à 10 ou inférieur à 1/10.

Selon le deuxième mode de réalisation de l'invention, les blocs scintillateurs 1 et 2, le réflecteur 3 et le filtre 6 constituent également une pièce monolithique ayant la forme d'un cylindre de révolution. A la différence du premier mode de réalisation de l'invention, le réflecteur 3 ne comprend pas de partie $P_2$ et un seul système de conversion 17 recouvre la deuxième base du cylindre de révolution dont la première base est soit nue, soit recouverte par un blindage 7 comme cela est représenté sur la figure 4. Le système de conversion 17 qui recueille les photons de fluorescence émis par les scintillateurs plastique 1 et 2 est fixé sur la première base du cylindre de révolution. Le bloc scintillateur 2 est dopé au gadolinium, par exemple à 3,6% de sa masse. Comme mentionné précédemment, de façon plus générale, le dopage du bloc scintillateur 2 est dopé au gadolinium à x% de sa masse, la valeur x étant comprise, par exemple, dans l'intervalle ]0, 8].

Pour assurer la différence des constantes de décroissance, un bloc scintillateur plastique est fait, par exemple, d'une matrice plastique styrénique et réticulée dans laquelle sont présents les fluorophores 2,5-diphényloxazole (PPO) et 1,4-bis[2-(2-méthylphényl)éthènyl]-benzène (Bis-MSB), l'autre bloc scintillateur plastique étant alors fait de la même matrice plastique styrénique et réticulée dans laquelle sont présents le fluorophore pyrène, par exemple entre 0,1 et 4% en masse, et le fluorophore 9,10-diphénylanthracène.

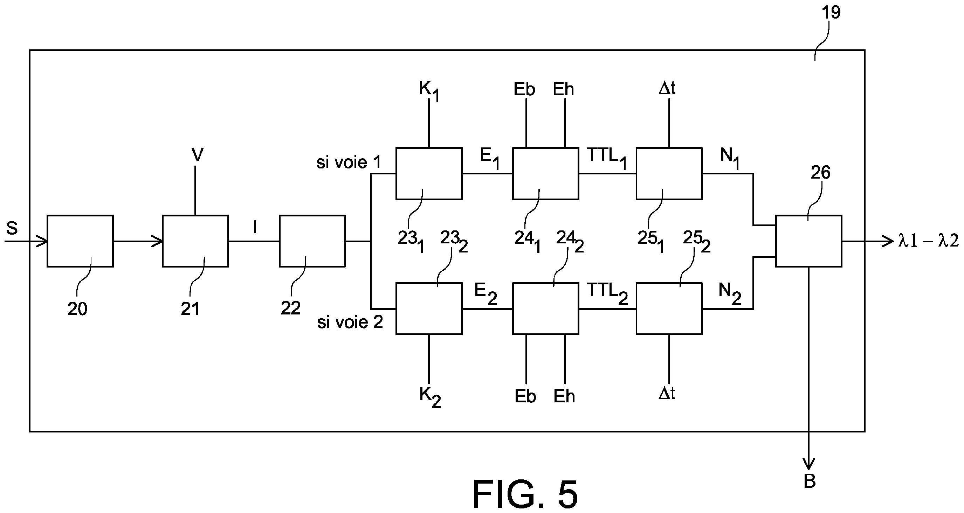

La figure 5 représente un synoptique du circuit de traitement qui participe au dispositif de comptage de neutrons thermiques selon le deuxième mode de réalisation de l'invention.

Le circuit de traitement comprend :

- un préamplificateur 20 (optionnel),
- un discriminateur d'impulsion 21,
- un module de discrimination de forme 22,
- une première branche de calcul de nombre de coups comprenant un premier circuit d'évaluation d'énergie $23_1$, un premier circuit de comparaison à double seuil $24_1$ et un premier compteur incrémental $25_1$,
- une deuxième branche de calcul de nombre de coups, montée en parallèle de la première branche, comprenant un deuxième circuit d'évaluation d'énergie $23_2$, un deuxième circuit de comparaison à double seuil $24_2$ et un deuxième compteur incrémental $25_2$, et

- un circuit de comparaison 26.

Le circuit de discrimination d'impulsion 21 délivre une impulsion I dès lors que le signal qu'il reçoit sur son entrée est supérieur à un seuil V. Le seuil V est représentatif du bruit électronique du photomultiplicateur. Le seuil V peut être un seuil en amplitude, une aire, une durée ou tout autre critère pertinent. La discrimination par rapport au bruit peut également être effectuée par un algorithme de déclenchement.

Dès lors qu'une impulsion I est délivrée, le module de discrimination de forme 22 discrimine l'impulsion I en fonction de sa forme. En effet, la forme de l'impulsion I est différente selon que la détection survient dans le bloc scintillateur 1 ou dans le bloc scintillateur 16. De façon connue en soi, la discrimination de la forme des impulsions est réalisée, par exemple, par fenêtre temporelle (« temporal window » en langue anglaise), par la mise en oeuvre d'algorithmes récursifs (transformées en ondelettes, régressions linéaires, etc.) ou par intersection de l'axe des abscisses (« zero-crossing » en langue anglaise).

Ainsi, si l'impulsion I est reconnue comme provenant d'une détection qui survient dans le bloc scintillateur 1, l'impulsion I est dirigée vers la première branche de calcul de nombre de coups alors que, si l'impulsion I est reconnue comme provenant d'une détection qui survient dans le bloc scintillateur 16, l'impulsion est dirigée vers la deuxième branche de calcul de nombres de coups.

Chaque branche de calcul de nombre de coups fonctionne de manière identique aux circuits $12_i$, $13_i$, $14_i$ (i=1, 2) mentionnés précédemment, en référence au premier mode de réalisation de l'invention. Le nombre de coups $N_1$ délivré par le premier compteur incrémental $25_1$ est ainsi associé à la détection du bloc scintillateur plastique dopé au gadolinium alors que le nombre de coup $N_2$ délivré par le deuxième compteur incrémental $25_2$ est associé à la détection du bloc scintillateur plastique non dopé au gadolinium. Comme déjà mentionné ci-dessus, le nombre de coups $N_1$ est associé à la détection de rayons gamma incidents et de rayons gamma issus de la détection de neutrons thermiques alors que le nombre de coups $N_2$ est associé à la seule détection de rayons gamma incidents.

Le circuit de comparaison 26 est identique au circuit de comparaison 15 (cf. figure 3 et la description associée). Dans l'hypothèse d'une détection de neutrons thermiques, le circuit de comparaison 26 délivre ainsi la différence $\lambda_1$-$\lambda_2$ qui représente la réponse neutronique du dispositif de l'invention dans la gamme d'énergie [Eb, Eh]. En l'absence d'une détection de neutrons, la différence $\lambda_1$-$\lambda_2$ n'est pas significative d'une détection de neutrons et le circuit de comparaison 26 délivre alors une donnée de bruit B.

**Revendications**

1. Dispositif de détection de neutrons thermiques comprenant un premier bloc scintillateur (1) et un deuxième bloc scintillateur (2), le deuxième bloc scintillateur (2) étant placé dans un volume intérieur du premier bloc scintillateur (1), un réflecteur de photons (3) qui sépare le premier bloc scintillateur (1) du deuxième bloc scintillateur (2) de façon à isoler une voie par laquelle le premier bloc scintillateur (1) émet des photons de fluorescence d'une voie par laquelle le deuxième bloc scintillateur (2) émet des photons de fluorescence,
un système de conversion de photons de fluorescence (4-5, 17) qui recueille les photons de fluorescence émis par les premier et deuxième blocs scintillateurs et délivre un signal électrique représentatif de photons gamma détectés par le premier bloc scintillateur et un signal électrique représentatif de photons gamma détectés par le deuxième bloc scintillateur,
un système de traitement qui calcule un premier signal de comptage ($N_1$) à partir du signal électrique représentatif des photons gamma détectés par le premier bloc scintillateur et un deuxième signal de comptage ($N_2$) à partir du signal électrique représentatif des photons gamma détectés par le deuxième bloc scintillateur,
**caractérisé en ce que**:

 - le premier (1) et le deuxième (2) blocs scintillateurs sont des blocs scintillateurs plastique de volumes sensiblement identiques contenant, chacun, au moins un fluorophore, le premier ou le deuxième bioc scintillateur étant dopé au gaaoiinium,

le dispositif de détection comprenant, en outre :

 - un circuit de comparaison (15) qui comprend des moyens pour faire une différence de valeurs estimées ($\lambda1$, $\lambda2$) des premier et deuxième signaux de comptage ($N_1$, $N_2$), des moyens pour calculer un seuil de décision à partir desdites valeurs estimées, et des moyens pour comparer ladite différence avec le seuil de décision de sorte que, si ladite différence est supérieure au seuil de décision, un signal de validation de détection de neutrons thermiques est délivré par le circuit de comparaison.

2. Dispositif selon la revendication 1, dans lequel le fluorophore présent dans le premier bloc scintillateur (1) est identique au fluorophore présent dans le deuxième bloc scintillateur (2) et le système de conversion de photons de fluorescence est constitué d'un premier système de conversion de photons de fluorescence (4) associé au premier bloc scintillateur et qui recueille les photons de fluorescence émis par le premier bloc scintillateur et d'un deuxième système de conversion de photons de fluorescence (5), indépendant du premier système de conversion de photons de fluorescence, et qui recueille les photons de fluorescence émis par le deuxième bloc scintillateur.

3. Dispositif selon la revendication 2, dans lequel le premier bloc scintillateur et le deuxième bloc scintillateur contiennent chacun ie fluorophore 2,5-diphenyloxazole et le fluorophore 1,4-bis[2-(2-methylphenyl)ethenyl]-benzène.

4. Dispositif selon la revendication 1, dans lequel au moins un fluorophore présent dans le premier bloc scintillateur (1) ou dans le deuxième bloc scintillateur (2) a une constante de décroissance très sensiblement différente d'une constante de décroissance de chacun des autres fluorophores présent dans le premier bloc scintillateur (1) et le deuxième bloc scintillateur (2) et le système de conversion de photons de fluorescence est un système unique associé au premier bloc scintillateur (1) et au deuxième bloc scintillateur (2) et qui recueille les photons de fluorescence émis par le premier bloc scintillateur et par le deuxième bloc scintillateur.

5. Dispositif selon la revendication 4, dans lequel le premier ou le deuxième bloc scintillateur contient le fluorophore 2,5-diphenyloxazole et le fluorophore 1,4-bis[2-(2-methylphenyl)ethenyl]-benzène et, respectivement, le deuxième ou le premier bloc scintillateur contient le fluorophore 2,5-diphenyloxazole et le fluorophore anthracène.

6. Dispositif selon l'une quelconque des revendications 2 ou 3, dans lequel le système de traitement comprend :

 - une première voie de traitement ($10_1$, $11_1$, $12_1$, $13_1$, $14_1$) qui délivre le premier signal de comptage ($N_1$) correspondant à un nombre d'événements détectés par le premier bloc scintillateur pendant une durée $\Delta t$, et
 - une deuxième voie de traitement ($10_2$, $11_2$, $12_2$, $13_2$, $14_2$) qui délivre le deuxième signal de comptage ($N_2$) correspondant à un nombre d'événements détectés par le deuxième bloc scintillateur pendant la même durée $\Delta t$.

7. Dispositif selon la revendication 6, dans lequel la première (respectivement deuxième) voie de traitement comprend :

 - un discriminateur d'impulsion ($11_1$, $11_2$) qui délivre une impulsion (I1, I2) dès lors que le signal de détection délivré par le premier, respectivement le deuxième, système de conversion de photons de fluorescence est supérieur à un premier seuil ($V_1$), respectivement un deuxième seuil ($V_2$),

- un circuit d'évaluation d'énergie ($12_1$, $12_2$) qui calcule une première valeur d'énergie (E1), respectivement une deuxième valeur d'énergie (E2), associée à l'impulsion (I1, I2) délivrée par le discriminateur d'impulsion,

- un comparateur à double seuil ($13_1$, $13_2$) qui compare la valeur d'énergie calculée par le circuit d'évaluation d'énergie à un intervalle de valeurs d'énergie (Eb-Eh) caractéristiques de pics d'émission de photons gamma du gadolinium et qui délivre un premier signal logique ($TTL_1$), respectivement deuxième signal logique ($TTL_2$), qui prend une première valeur si la valeur d'énergie calculée appartient à l'intervalle de valeurs d'énergie ou une deuxième valeur si l'énergie calculée n'appartient pas à l'intervalle de valeurs d'énergie, et

- un compteur incrémental ($14_1$, $14_2$) qui compte, sur une durée $\Delta t$, les signaux logiques de première valeur délivrés par chaque comparateur à double seuil et délivre la première valeur de comptage ($N_1$), respectivement la deuxième valeur de comptage ($N_2$).

**8.** Dispositif selon l'une quelconque des revendications 4 ou 5, dans lequel le système de traitement comprend :

- un discriminateur d'impulsions (20) qui reçoit en entrée le signal représentatif de photons gamma détectés par le détecteur de neutrons thermiques et délivre une impulsion (I) dès lors que ledit signal est supérieur à un seuil (V),

- un module de discrimination de forme (22) qui discrimine ladite impulsion en fonction de sa forme de sorte que l'impulsion est considérée comme associée à un événement qui est survenu soit dans le premier bloc scintillateur, soit dans le deuxième bloc scintillateur,

- une première voie de traitement ($23_1$, $24_1$, $25_1$) apte à délivrer le premier signal de comptage ($N_1$) correspondant à un nombre d'événements détectées par le premier bloc scintillateur pendant une durée $\Delta t$, et

- une deuxième voie de traitement ($23_2$, $24_2$, $25_2$) apte à délivrer le deuxième signal de comptage ($N_2$) correspondant à un nombre d'événements détectées par le deuxième bloc scintillateur pendant une même durée $\Delta t$.

**9.** Dispositif selon la revendication 8, dans lequel, la première (respectivement la deuxième) voie comprend :

- un circuit d'évaluation d'énergie ($12_1$, $12_2$) qui calcule une première valeur d'énergie (E1), respectivement une deuxième valeur d'énergie (E2), associée à l'impulsion (I1, I2) délivrée par le discriminateur d'impulsion,

- un comparateur à double seuil ($13_1$, $13_2$) qui compare la valeur d'énergie calculée par le circuit d'évaluation d'énergie à un intervalle de valeurs d'énergie (Eb-Eh) caractéristiques de pics d'émission de photons gamma du gadolinium et qui délivre un premier signal logique ($TTL_1$), respectivement deuxième signal logique (TTL2), qui prend une première valeur si la valeur d'énergie calculée appartient à l'intervalle de valeurs d'énergie ou une deuxième valeur si l'énergie calculée n'appartient pas à l'intervalle de valeurs d'énergie, et

- un compteur incrémental ($14_1$, $14_2$) qui compte, sur une durée $\Delta t$, les signaux logiques de première valeur délivrés par chaque comparateur à double seuil et délivre la première valeur de comptage ($N_1$), respectivement la deuxième valeur de comptage ($N_2$).

**10.** Dispositif selon l'une quelconque des revendications précédentes et qui comprend, en outre, des moyens aptes à équilibrer les rendements lumineux des premier et deuxième blocs scintillateurs.

**11.** Dispositif selon la revendication 10, dans lequel les moyens aptes à équilibrer les rendements lumineux sont constitués :

- d'un filtre optique (6) placé soit entre la voie par laquelle le premier bloc scintillateur (1) émet des photons de fluorescence et le système de conversion de photons de fluorescence, soit entre la voie par laquelle le deuxième bloc scintillateur (2) émet des photons de fluorescence et le système de conversion de photons de fluorescence, ou

- d'un dispositif (6) apte à décaler une longueur d'onde de photons de fluorescence, le dispositif apte à décaler une longueur d'onde de photons de fluorescence étant placé soit entre la voie par laquelle le premier bloc scintillateur (1) émet des photons de fluorescence et le système de conversion de photons de fluorescence, soit entre la voie par laquelle le deuxième bloc scintillateur (2) émet des photons de fluorescence et le système de conversion de photons de fluorescence, ou

- d'une présence d'au moins un fluorophore ayant une concentration donnée et/ou une nature particulière dans le premier ou le deuxième bloc scintillateur.

**12.** Dispositif selon l'une quelconque des revendications précédentes, dans lequel le plastique du premier et du deuxième blocs scintillateurs est constitué d'une même matrice de polymère.

13. Dispositif selon la revendication 12, dans lequel la matrice de polymère est une matière plastique styrénique réticulée.

14. Dispositif selon l'une quelconque des revendications précédentes, dans lequel le bloc scintillateur dopé au gadolinium est dopé à 3,6% de sa masse.

15. Dispositif selon l'une quelconque des revendications précédentes, dans lequel la différence des valeurs estimées est une différence pondérée.

16. Dispositif selon l'une quelconque des revendications précédentes, dans lequel le circuit de comparaison met en oeuvre un algorithme de compensation par test d'hypothèse de facteur K.

**Patentansprüche**

1. Vorrichtung zur Detektion von thermischen Neutronen, umfassend einen ersten Szintillator-Block (1) und einen zweiten Szintillator-Block (2), wobei der zweite Szintillator-Block (2) in einem inneren Volumen des ersten Szintillator-Blocks (1) platziert ist, einen Photonenreflektor (3), welcher den ersten Szintillator-Block (1) von dem zweiten Szintillator-Block (2) derart trennt, dass ein Weg, durch welchen der erste Szintillator-Block (1) Fluoreszenz-Photonen emittiert, von einem Weg isoliert wird, durch welchen der zweite Szintillator-Block (2) Fluoreszenz-Photonen emittiert, ein System zur Konversion von Fluoreszenz-Photonen (4-5, 17), welches Fluoreszenz-Photonen sammelt, welche von den ersten und zweiten Szintillator-Blöcken emittiert werden, und ein elektrisches Signal liefert, welches von dem ersten Szintillator-Block detektierte Gamma-Photonen repräsentiert, und ein elektrisches Signal liefert, welches von dem zweiten Szintillator-Block detektierte Gamma-Photonen repräsentiert, ein Verarbeitungssystem, welches ein erstes Zählsignal ($N_1$) ausgehend von dem elektrischen Signal berechnet, welches die von dem ersten Szintillator-Block detektierten Gamma-Photonen repräsentiert, und ein zweites Zählsignal ($N_2$) ausgehend von dem elektrischen Signal berechnet, welches die von dem zweiten Szintillator-Block detektierten Gamma-Photonen repräsentiert, **dadurch gekennzeichnet, dass**:

die ersten (1) und zweiten (2) Szintillator-Blöcke Kunststoffszintillator-Blöcke von im Wesentlichen identischen Voluma sind, welche jeweils wenigstens ein Fluorophor enthalten, wobei der erste oder der zweite Szintillator-Block mit Gadolinium dotiert ist, wobei die Vorrichtung zur Detektion ferner umfasst:

- eine Vergleichsschaltung (15), welche Mittel zum Bilden einer Differenz zwischen geschätzten Werten ($\lambda1$, $\lambda2$) der ersten und zweiten Zählsignale ($N_1$, $N_2$), Mittel zum Berechnen einer Entscheidungsschwelle ausgehend von den geschätzten Werten und Mittel zum Vergleichen der Differenz mit der Entscheidungsschwelle derart umfasst, dass wenn die Differenz größer als die Entscheidungsschwelle ist, ein Validierungssignal einer Detektion von thermischen Neutronen durch die Vergleichsschaltung geliefert wird.

2. Vorrichtung nach Anspruch 1, wobei das Fluorophor, welches in dem ersten Szintillator-Block (1) vorliegt, identisch zu dem Fluorophor ist, welches in dem zweiten Szintillator-Block (2) vorliegt, und das System zur Konversion von Fluoreszenz-Photonen aus einem ersten System zur Konversion von Fluoreszenz-Photonen (4), welches dem ersten Szintillator-Block zugeordnet ist und welches die Fluoreszenz-Photonen sammelt, welche von dem ersten Szintillator-Block emittiert werden, und aus einem zweiten System zur Konversion von Fluoreszenz-Photonen (5) besteht, welches unabhängig von dem ersten System zur Konversion von Fluoreszenz-Photonen ist und welches die Fluoreszenz-Photonen sammelt, welche von dem zweiten Szintillator-Block emittiert werden.

3. Vorrichtung nach Anspruch 2, wobei der erste Szintillator-Block und der zweite Szintillator-Block jeweils das Fluorophor 2,5-Diphenyloxazol und das Fluorophor 1,4-bis[2-(2-Methylphenyl)ethenyl]-Benzen enthalten.

4. Vorrichtung nach Anspruch 1, wobei wenigstens ein Fluorophor, welches in dem ersten Szintillator-Block (1) oder in dem zweiten Szintillator-Block (2) vorliegt, eine Zerfallskonstante aufweist, welche sehr wesentlich verschieden von einer Zerfallskonstante von jedem der anderen Fluorophore ist, welche in dem ersten Szintillator-Block (1) und dem zweiten Szintillator-Block (2) vorliegen, und das System zur Konversion von Fluoreszenz-Photonen ein einzelnes System ist, welches dem ersten Szintillator-Block (1) und dem zweiten Szintillator-Block (2) zugeordnet ist und welches die Fluoreszenz-Photonen sammelt, welche von dem ersten Szintillator-Block und von dem zweiten Szintillator-Block emittiert werden.

**5.** Vorrichtung nach Anspruch 4, wobei der erste oder der zweite Szintillator-Block das Fluorophor 2,5-Diphenyloxazol und das Fluorophor 1,4-bis[2-(2-Methylphenyl)ethenyl]-Benzen enthalten und entsprechend der zweite oder der erste Szintillator-Block das Fluorophor 2,5-Diphenyloxazol und das Fluorophor Anthrazen enthalten.

**6.** Vorrichtung nach einem der Ansprüche 2 oder 3, wobei das Verarbeitungssystem umfasst:

- einen ersten Verarbeitungsweg ($10_1$, $11_1$, $12_1$, $13_1$, $14_1$), welcher das erste Zählsignal ($N_1$) liefert, welches einer Anzahl von Ereignissen entspricht, welche durch den ersten Szintillator-Block während einer Dauer $\Delta t$ detektiert werden, und

- einen zweiten Verarbeitungsweg ($10_2$, $11_2$, $12_2$, $13_2$, $14_2$), welcher das zweite Zählsignal ($N_2$) liefert, welches einer Anzahl von Ereignissen entspricht, welche durch den zweiten Szintillator-Block während derselben Dauer $\Delta t$ detektiert werden.

**7.** Vorrichtung nach Anspruch 6, wobei der erste (respektive zweite) Verarbeitungsweg umfasst:

- einen Puls-Diskriminator ($11_1$, $11_2$), welcher einen Puls (I1, I2) liefert, sobald das von dem ersten, respektive zweiten, System zur Konversion von Fluoreszenz-Photonen gelieferte Detektionssignal größer als ein erster Schwellenwert ($V_1$), respektive ein zweiter Schwellenwert ($V_2$), ist,

- eine Evaluationsschaltung für Energie ($12_1$, $12_2$), welche einen ersten Energiewert (E1), respektive einen zweiten Energiewert (E2), berechnet, welcher dem von dem Puls-Diskriminator gelieferten Puls (I1, I2) zugeordnet ist,

- eine Doppelschwellen-Vergleichseinheit ($13_1$, $13_2$), welche den von der Evaluationsschaltung für Energie berechneten Energiewert mit einem Intervall von Energiewerten (Eb-Eh) vergleicht, welche charakteristisch für Emissionsspitzen von Gamma-Photonen von Gadolinium sind, und welche ein erstes logisches Signal ($TTL_1$), respektive zweites logisches Signal ($TTL_2$) liefert, welches einen ersten Wert annimmt, wenn der berechnete Energiewert in das Intervall von Energiewerten fällt, oder einen zweiten Wert annimmt, wenn die berechnete Energie nicht in das Intervall von Energiewerten fällt, und

- einen Inkrementalzähler ($14_1$, $14_2$), welcher während einer Dauer $\Delta t$ die logischen Signale vom ersten Wert zählt, welche von jeder Doppelschwellen-Vergleichseinheit geliefert werden und den ersten Zählwert ($N_1$), respektive den zweiten Zählwert ($N_2$), liefert.

**8.** Vorrichtung nach einem der Ansprüche 4 oder 5, wobei das Verarbeitungssystem umfasst:

- einen Puls-Diskriminator (20), welcher als Eingabe das Signal erhält, welches die von dem Detektor für thermische Neutronen detektierten Gamma-Photonen repräsentiert, und einen Puls (I) liefert, sobald das Signal größer als ein Schwellenwert (V) ist,

- ein Form-Diskriminierungsmodul (22), welches den Puls als Funktion seiner Form derart diskriminiert, dass der Puls als einem Ereignis zugeordnet betrachtet wird, welches entweder in dem ersten Szintillator-Block oder in dem zweiten Szintillator-Block aufgetreten ist,

- einen ersten Verarbeitungsweg ($23_1$, $24_1$, $25_1$), welcher in der Lage ist, das erste Zählsignal ($N_1$) zu liefern, welches einer Anzahl von Ereignissen entspricht, welche von dem ersten Szintillator-Block während einer Dauer $\Delta t$ detektiert werden, und

- einen zweiten Verarbeitungsweg ($23_2$, $24_2$, $25_2$), welcher in der Lage ist, das zweite Zählsignal ($N_2$) zu liefern, welches einer Anzahl von Ereignissen entspricht, welche von dem zweiten Szintillator-Block während derselben Dauer $\Delta t$ detektiert werden.

**9.** Vorrichtung nach Anspruch 8, wobei der erste, respektive der zweite, Weg umfasst:

- eine Evaluationsschaltung für Energie ($12_1$, $12_2$), welche einen ersten Energiewert (E1), respektive einen zweiten Energiewert (E2), berechnet, welcher dem Puls (I1, I2) zugeordnet ist, welcher von dem Puls-Diskriminator geliefert wird,

- eine Doppelschwellen-Vergleichseinheit ($13_1$, $13_2$), welche den Energiewert, welcher durch die Evaluationsschaltung für Energie berechnet wird, mit einem Intervall von Energiewerten (Eb-Eh) vergleicht, welche charakteristisch für Emissionsspitzen von Gamma-Photonen von Gadolinium sind, und welche ein erstes logisches Signal ($TTL_1$), respektive zweites logisches Signal ($TTL_2$), liefert, welches einen ersten Wert annimmt, wenn der berechnete Energiewert in das Intervall von Energiewerten fällt, oder einen zweiten Wert annimmt, wenn die berechnete Energie nicht in das Intervall von Energiewerten fällt, und

- einen Inkrementalzähler ($14_1$, $14_2$), welcher während einer Dauer $\Delta t$ die logischen Signale vom ersten Wert zählt, welche von jeder Doppelschwellen-Vergleichseinheit geliefert werden, und den ersten Zählwert ($N_1$), respektive den zweiten Zählwert ($N_2$), liefert.

**10.** Vorrichtung nach einem der vorhergehenden Ansprüche, und welche ferner Mittel, welche in der Lage sind, die Lichtausbeuten der ersten und zweiten Szintillator-Blöcke auszugleichen, umfasst.

**11.** Vorrichtung nach Anspruch 10, wobei die Mittel, welche in der Lage sind, die Lichtausbeuten auszugleichen, gebildet sind aus:

- einem optischen Filter (6), welcher entweder zwischen dem Weg, durch welchen der erste Szintillator-Block (1) Fluoreszenz-Photonen emittiert, und dem System zur Konversion von Fluoreszenz-Photonen oder zwischen dem Weg, durch welchen der zweite Szintillator-Block (2) Fluoreszenz-Photonen emittiert, und dem System zur Konversion von Fluoreszenz-Photonen platziert ist, oder

- einer Vorrichtung (6), welche in der Lage ist, eine Wellenlänge von Fluoreszenz-Photonen zu verschieben, wobei die Vorrichtung, welche in der Lage ist, eine Wellenlänge von Fluoreszenz-Photonen zu verschieben entweder zwischen dem Weg, durch welchen der erste Szintillator-Block (1) Fluoreszenz-Photonen emittiert, und dem System zur Konversion von Fluoreszenz-Photonen oder zwischen dem Weg, durch welchen der zweiten Szintillator-Block (2) Fluoreszenz-Photonen emittiert, und dem System zur Konversion von Fluoreszenz-Photonen platziert ist, oder

- ein Vorliegen von wenigstens einem Fluorophor, welches eine gegebene Konzentration und/oder eine bestimmte Beschaffenheit aufweist, in dem ersten oder dem zweiten Szintillator-Block.

**12.** Vorrichtung nach einem der vorhergehenden Ansprüche, wobei der Kunststoff der ersten und der zweiten Szintillator-Blöcke aus einer gleichen Polymer-Matrix gebildet ist.

**13.** Vorrichtung nach Anspruch 12, wobei die Polymer-Matrix ein netzartiges Styrenkunststoff-Material ist.

**14.** Vorrichtung nach einem der vorhergehenden Ansprüche, wobei der mit Gadolinium dotierte Szintillator-Block mit 3,6% seiner Masse dotiert ist.

**15.** Vorrichtung nach einem der vorhergehenden Ansprüche, wobei die Differenz der geschätzten Werte eine gewichtete Differenz ist.

**16.** Vorrichtung nach einem der vorhergehenden Ansprüche, wobei die Vergleichsschaltung einen Kompensationsalgorithmus durch Hypothesentest mit Faktor K ausführt.

**Claims**

**1.** A thermal neutron detection device comprising a first scintillator block (1) and a second scintillator block (2), the second scintillator block (2) being placed in an internal volume of the first scintillator block (1), a photon reflector (3) which separates the first scintillator block (1) from the second scintillator block (2) so as to isolate a pathway through which the first scintillator block (1) emits fluorescence photons from another pathway through which the second scintillator block (2) emits fluorescence photons, a fluorescence photon conversion system (4-5, 17) which collects the fluorescence photons emitted by the first and second scintillator blocks and delivers an electric signal representative of gamma photons detected by the first scintillator block and an electric signal representative of gamma photons detected by the second scintillator block, a processing system which calculates a first counting signal ($N_1$) from the electric signal representative of the gamma photons detected by the first scintillator block and a second counting signal ($N_2$) from the electric signal representative of the gamma photons detected by the second scintillator block, **characterised in that**:

- the first (1) and second (2) scintillator blocks are plastic scintillator blocks with substantially identical volumes each containing at least one fluorophore, the first or second scintillator block being doped with gadolinium,

the detection device further comprising:

- a comparison circuit (15) which comprises means to make a difference of estimated values ($\lambda1$, $\lambda2$) of the first and second counting signals ($N_1$, $N_2$), means for calculating a decision threshold from said estimated values, and means for comparing said difference with the decision threshold such that, if said difference is higher than the decision threshold, a thermal neutron detection validation signal is delivered by the comparison circuit.

**2.** The device according to claim 1, wherein the fluorophore present in the first scintillator block (1) is identical to the fluorophore present in the second scintillator block (2) and the fluorescence photon conversion system consists of a first fluorescence photon conversion system (4) associated with the first scintillator block and which collects the fluorescence photons emitted by the first scintillator block and a second fluorescence photon conversion system (5), independent of the first fluorescence photon conversion system, and which collects the fluorescence photons emitted by the second scintillator block.

**3.** The device according to claim 2, wherein the first scintillator block and the second scintillator block each contain the fluorophore 2,5-diphenyloxazole and the fluorophore 1,4-bis[2-(2-methylphenyl)ethenyl]-benzene.

**4.** The device according to claim 1, wherein at least one fluorophore present in the first scintillator block (1) or in the second scintillator block (2) has a decay constant very substantially different from a decay constant of each of the other fluorophores present in the first scintillator block (1) and the second scintillator block (2) and the fluorescence photon conversion system is a single system associated with the first scintillator block (1) and with the second scintillator block (2) and which collects the fluorescence photons emitted by the first scintillator block and by the second scintillator block.

**5.** The device according to claim 4, wherein the first or the second scintillator block contains the fluorophore 2,5-diphenyloxazole and the fluorophore 1,4-bis[2-(2-methylphenyl)ethenyl]-benzene and, respectively, the second or the first scintillator block contains the fluorophore 2,5-diphenyloxazole and the fluorophore anthracene.

**6.** The device according to any of claims 2 and 3, wherein the processing system comprises:

- a first processing pathway ($10_1$, $11_1$, $12_1$, $13_1$, $14_1$) which delivers the first counting signal ($N_1$) corresponding to a number of events detected by the first scintillator block for a duration $\Delta t$, and
- a second processing pathway ($10_2$, $11_2$, $12_2$, $13_2$, $14_2$) which delivers the second counting signal ($N_2$) corresponding to a number of events detected by the second scintillator block for the same duration $\Delta t$.

**7.** The device according to claim 6, wherein the first (respectively second) processing pathway comprises:

- a pulse discriminator ($11_1$, $11_2$) which delivers a pulse (11, 12) as soon as the detection signal delivered by the first, respectively the second, fluorescence photon conversion system is higher than a first threshold ($V_1$), respectively a second threshold ($V_2$),
- an energy evaluation circuit ($12_1$, $12_2$) which calculates a first energy value (E1), respectively a second energy value (E2), associated with the pulse (I1, I2) delivered by the pulse discriminator,
- a double threshold comparator ($13_1$, $13_2$) which compares the energy value calculated by the energy evaluation circuit with an interval of energy values (Eb-Eh) characteristic of gamma photon emission peaks of gadolinium and which delivers a first logic signal ($TTL_1$), respectively a second logic signal ($TTL_2$), which assumes a first value if the energy value calculated belongs to the interval of energy values or a second value if the energy calculated does not belong to the interval of energy values, and
- an incremental counter ($14_1$, $14_2$) which counts, over a duration $\Delta t$, the logic signals of first value delivered by each double threshold comparator and delivers the first counting value ($N_1$), respectively the second counting value ($N_2$).

**8.** The device according to any of claims 4 and 5, wherein the processing system comprises:

- a pulse discriminator (20) which receives as an input the signal representative of gamma photons detected by the thermal neutron detector and delivers a pulse (I) as soon as said signal is higher than a threshold (V),
- a form discrimination module (22) which discriminates said pulse as a function of its form such that the pulse is considered as associated with an event which occurred either in the first scintillator block, or in the second scintillator block,
- a first processing pathway ($23_1$, $24_1$, $25_1$) able to deliver the first counting signal ($N_1$) corresponding to a number of events detected by the first scintillator block for a duration $\Delta t$, and
- a second processing pathway ($23_2$, $24_2$, $25_2$) able to deliver the second counting signal ($N_2$) corresponding to a number of events detected by the second scintillator block for a same duration $\Delta t$.

**9.** The device according to claim 8, wherein the first (respectively the second) pathway comprises:

- an energy evaluation circuit ($12_1$, $12_2$) which calculates a first energy value (E1), respectively a second energy value (E2), associated with the pulse (I1, I2) delivered by the pulse discriminator,
- a double threshold comparator ($13_1$, $13_2$) which compares the energy value calculated by the energy evaluation circuit with an interval of energy values (Eb-Eh) characteristic of gamma photon emission peaks of gadolinium and which delivers a first logic signal ($TTL_1$), respectively a second logic signal ($TTL_2$), which assumes a first value if the energy value calculated belongs to the interval of energy values or a second value if the energy calculated does not belong to the interval of energy values, and

- an incremental counter ($14_1$, $14_2$) which counts, over a duration $\Delta t$, the logic signals of first value delivered by each double threshold comparator and delivers the first counting value ($N_1$), respectively the second counting value ($N_2$).

10. The device according to any of preceding claims and which further comprises means able to balance light efficiencies of the first and second scintillator blocks.

11. The device according to claim 10, wherein the means able to balance light efficiencies consist of:

- an optical filter (6) placed either between the pathway through which the first scintillator block (1) emits fluorescence photons and the fluorescence photon conversion system, or between the pathway through which the second scintillator block (2) emits fluorescence photons and the fluorescence photon conversion system, or
- a device (6) able to shift a fluorescence photon wavelength, the device able to shift a fluorescence photon wavelength being placed either between the pathway through which the first scintillator block (1) emits fluorescence photons and the fluorescence photon conversion system, or between the pathway through which the second scintillator block (2) emits fluorescence photons and the fluorescence photon conversion system, or
- a presence of at least one fluorophore having a given concentration and/or a particular nature in the first or second scintillator block.

12. The device according to any of the preceding claims, wherein the plastic of the first and second scintillator blocks consists of a same polymer matrix.

13. The device according to claim 12, wherein the polymer matrix is a crosslinked styrenic plastic material.

14. The device according to any of preceding claims, wherein the scintillator block doped with gadolinium is doped by 3.6% of its mass.

15. The device according to any of the preceding claims, wherein the difference in the estimated values is a weighted difference.

16. The device according to any of the preceding claims, wherein the comparison circuit implements a K factor hypothesis testing compensation algorithm.

FIG. 1

FIG. 2

FIG. 3

FIG. 4

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8389941 B
- EP 2290406 A2

- WO 2005008287 A1